# EUROPÄISCHE PATENTSCHRIFT

(11) **EP 0 918 250 B1**
(45) Veröffentlichungstag und Bekanntmachung des Hinweises auf die Patenterteilung: **23.01.2002**
(21) Anmeldenummer: 97120372.4
(22) Anmeldetag: 20.11.1997
(51) Int. Cl.: G03B 27/73

(54) **Fotoelektrische Abtastvorrichtung für einen fotografischen Film**
Photoelectric scanner for a photographic film
Dispositif de balayage photoélectrique pour un film photographique

(43) Veröffentlichungstag der Anmeldung: 26.05.1999
(73) Patentinhaber: GRETAG IMAGING AG, 8105 Regensdorf (CH)
(72) Erfinder: Frick, Beat, 8107 Buchs (CH)
(74) Vertreter: Schwabe - Sandmair - Marx

(56) Entgegenhaltungen:
- EP-A- 0 417 042
- EP-A- 0 489 719

## Beschreibung

Die Erfindung betrifft eine Abtastvorrichtung zur im wesentlichen punktweisen fotoelektrischen Ausmessung von Bildfeldern eines fotografischen Films in einem fotografischen Kopiergerät, gemäss dem 0berbegriff des unabhängigen Anspruchs.

Abtastvorrichtungen dieser Art werden im allgemeinen als Scanner bezeichnet und sind in zahllosen Ausführungsvarianten bekannt und im praktischen Einsatz.

Die EP-A-0 417 042 offenbart eine Abtastvorrichtung, bei der eine Lichtquelle einen Lichtstrahl abgibt, der über Lichtfaserbündel und über eine Lochblendenscheibe sowie über weitere Lichtleiter zeilenweise durch einen abzutastenden Film hindurchgestrahlt wird. Im Ergebnis wird ein durch die abgetastete Vorlage des abzutastenden Films modifiziertes Lichtsignal jenseits des Filmes aufgefangen und über Lichtleiter zu für verschiedene Farben eingerichteten Detektoren geführt, um einer farblich getrennten Auswertung unterzogen zu werden. Als Alternative kann die Lochblendenscheibe in einer Unterbrechung der auffangseitigen Lichtleiter angeordnet sein.

Aus der EP-A 0 489 719 geht eine Abtastvorrichtung hervor, die ein CCD-Bildsensorenarray zeigt, auf das ein durch einen Film hindurchgeleiteter Lichtstrahl auftrifft, der über ein Prisma aufgespalten worden ist.

Durch die vorliegende Erfindung soll eine Abtastvorrichtung geschaffen werden, welche mit für die Praxis vertretbarem konstruktiven Aufwand die Voraussetzungen für eine punktweise Ausmessung schafft.

Die Lösung dieser der Erfindung zugrundeliegenden Aufgabe ergibt sich aus den im kennzeichnenden Teil des unabhängigen Anspruchs beschriebenen Merkmalen. Besonders vorteilhafte Ausgestaltungen und Weiterbildungen sind Gegenstand der abhängigen Ansprüche.

Im folgenden wird ein Ausführungsbeispiel der Erfindung anhand der Zeichnung näher erläutert. Es zeigen:
- Fig. 1: eine schematische Prinzipskizze einer erfindungsgemässen Abtastvorrichtung,
- Fig. 2: eine Gesamtansicht eines praktischen Ausführungsbeispiels,
- Fig. 3: eine Detailansicht der wesentlichsten Komponenten der Abtastvorrichtung gemäss Fig. 2,
- Fig. 4: eine Detailansicht der Auffangeinrichtung der Abtastvorrichtung gemäss Fig. 2 und
- Fig. 5: einen Schnitt durch den optischen Multiplexer der Abtastvorrichtung.

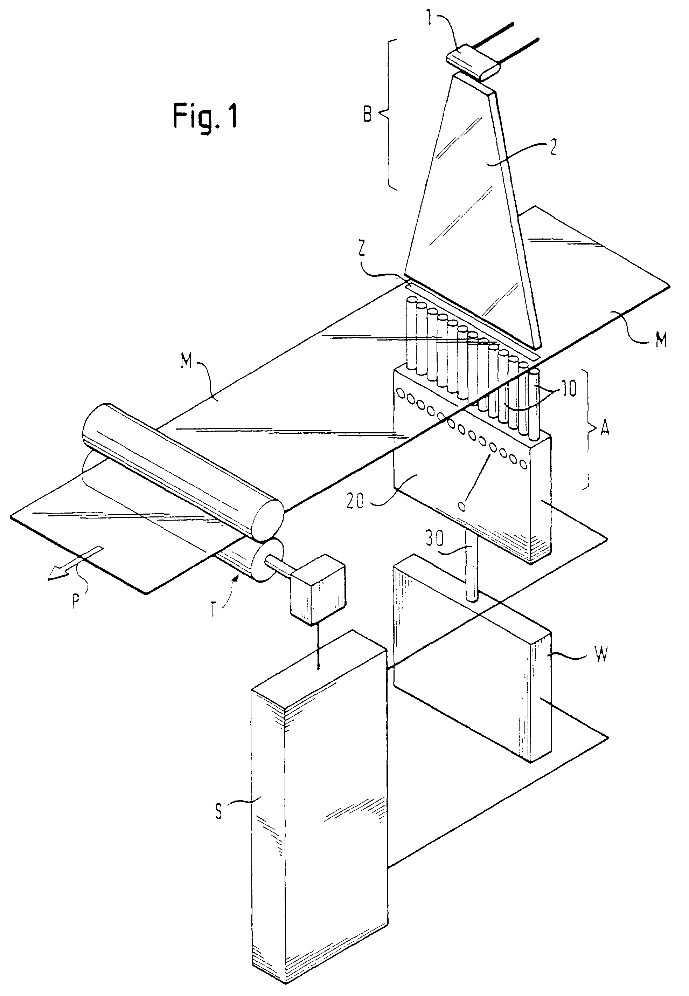

Die wichtigsten Komponenten einer erfindungsgemässen Abtastvorrichtung sind am besten aus der schematischen Prinzipskizze der Fig. 1 erkennbar. Demgemäss umfasst die Abtastvorrichtung eine durch Transportwalzen angedeutete Transporteinrichtung T für den abzutastenden fotografischen Film M, eine Beleuchtungseinrichtung B, eine Auffangeinrichtung A, eine fotoelektrische Wandlereinrichtung W und eine Steuereinrichtung S, welche einerseits die Transporteinrichtung T, die Auffangeinrichtung A und die Wandlereinrichtung W steuert und andererseits die von der Wandlereinrichtung W erzeugten elektrischen Signale verarbeitet bzw. zur weiteren Verarbeitung aufbereitet.

Der Film M ist typischerweise ein Filmstreifen. Er wird von der Transporteinrichtung T in die durch den Pfeil P angedeutete Transportrichtung transportiert. Die Beleuchtungseinrichtung B beaufschlagt der Film M mit Messlicht in einem schmalen linienförmigen Bereich, der im folgenden als Messzeile Z bezeichnet ist und sich im wesentlichen quer zur Transportrichtung P erstreckt. Durch entsprechenden Vorschub des Films M wird die gesamte abzutastende Fläche des letzteren in aufeinanderfolgenden parallelen Zeilen beleuchtet.

Das jeweils im Bereich einer Messzeile Z vom Film durchgelassene Messlicht wird von der Auffangeinrichtung A aufgefangen und der fotoelektrischen Wandlereinrichtung W zugeführt. Diese wandelt das Messlicht in entsprechende elektrische Signale um und führt sie der Steuereinrichtung S zu, wo sie dann zur weiteren Verarbeitung zur Verfügung stehen.

In dieser Allgemeinheit entspricht die Abtastvorrichtung herkömmlichen Abtastvorrichtungen dieser Art, so dass der Fachmann soweit keiner näheren Erläuterung bedarf.

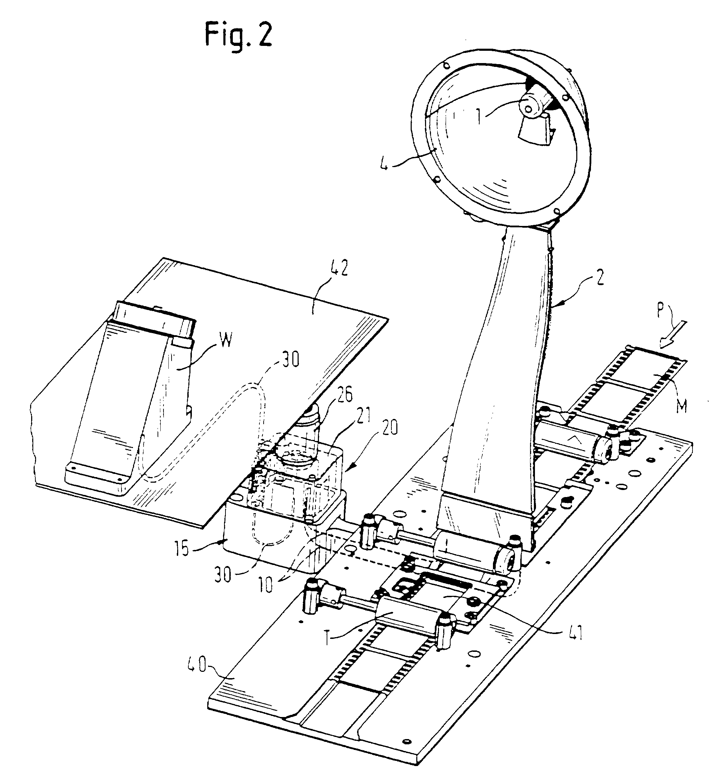

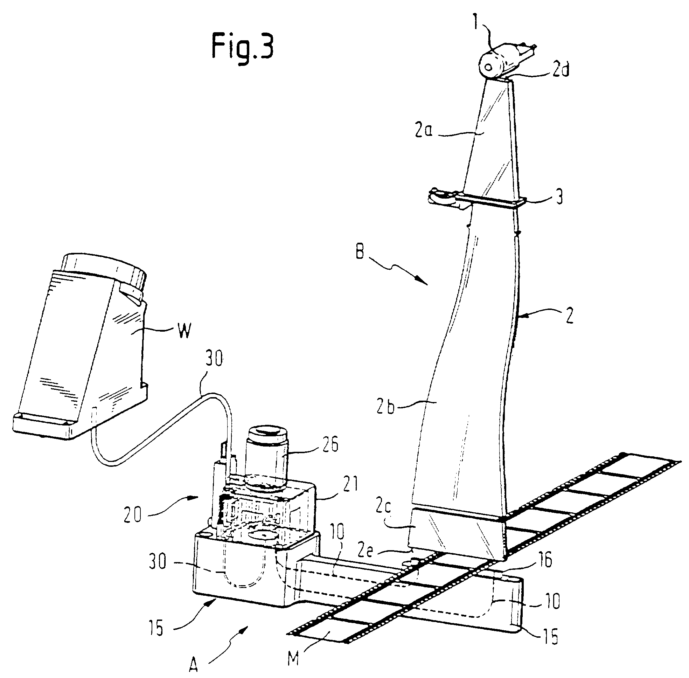

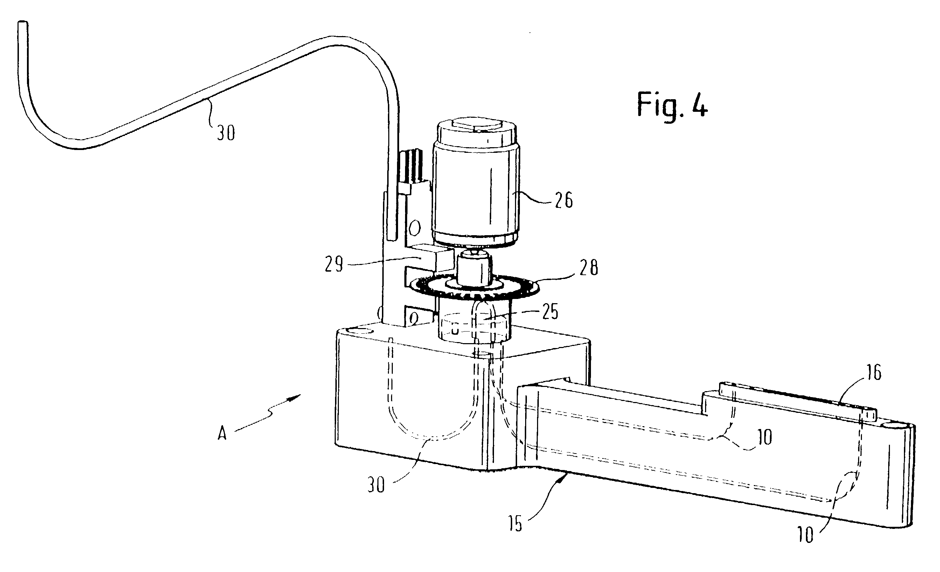

Der wesentliche Unterschied dieser erfindungsgemässen Abtastvorrichtung gegenüber den herkömmlichen Vorrichtungen dieser Art besteht in der Ausbildung des optischen Multiplexers. Darauf wird im folgenden anhand der Figuren 2-5 näher eingegangen.

Die Beleuchtungseinrichtung B besteht im wesentlichen aus einer Lichtquelle 1 und einem Lichtleitkörper 2, der in drei optisch miteinander verbundene Abschnitte 2a, 2b und 2c aufgeteilt ist und eine kleinere Lichteintrittsfläche 2d und eine grössere Lichtaustrittsfläche 2e aufweist. Die Lichtquelle 1 ist typischerweise eine Halogenlampe. Der Lichtleitkörper 2 hat die Gestalt einer dünnen, leicht gekrümmten, trapezförmigen Platte mittrechteckigem Querschnitt. Er befindet sich zwischen der Lichtquelle 1 und dem Film M und führt das Messlicht von der Lichtquelle auf der Film. Die Lichtaustrittsfläche 2e stimmt in ihren Abmessungen im wesentlichen mit denen der Messzeile Z überein, so dass der Film im wesentlichen nur im Bereich der Messzeile Z mit Messlicht beaufschlagt wird.

Der in der Zeichnung oberste, der Lichtquelle 1 zugewandte Abschnitt 2a des Lichtleitkörpers 2 besteht aus Glas bzw. Quarzglas, die übrigen Abschnitte 2b und 2c bestehen aus einem geeigneten transparenten Kunststoff, z.B. Plexiglas. Zwischen dem ersten Abschnitt 2a und dem mittleren Abschnitt 2b des Lichtleitkörpers 2 ist ein Infrarot-Filter 3 angeordnet. Gegebenenfalls können auch noch weitere Filter zur Beeinflussung der spektralen Charakteristik des Messlichts vorgesehen sein.

Beim Einsatz dieser erfindungsgemässen Abtastvorrichtung in einem fotografischen Kopiergerät kann die Lichtquelle 1 identisch mit der Kopierlichtquelle des Kopiergeräts sein. In Fig.2 ist erkennbar, wie das Messlicht durch den seitlich in einen bei Kopierlichtquellen üblicherweise vorhandenen, die Lampe 1 umgebenden Hohlspiegel 4 eingeführten Lichtleitkörper 2 vom Kopierlicht abgezweigt wird.

Die Auffangeinrichtung A ist auf der der Beleuchtungseinrichtung B gegenüberliegenden Seite des Films M, in der Zeichnung also unterhalb desselben, angeordnet. Sie hat die Aufgabe, das im Bereich der Messzeile Z vom Film M durchgelassene Messlicht aufzupicken und der Wandlereinrichtung W zuzuführen. Eine weitere Aufgabe besteht in der Auflösung der Messzeile Z in eine Vielzahl von diskreten Abtastpunkten, deren Abmessung in Längsrichtung der Messzeile beispielsweise in etwa gleich gross ist wie die Breite der Messzeile. Die Auflösung der Abtastvorrichtung ist damit in beiden Dimensionen (Transportrichtung P und Längsrichtung der Messzeile Z) gleich gross. Selbstverständlich können die Auflösungen auch verschieden gewählt werden.

Die Auffangeinrichtung A besteht im wesentlichen aus einer Vielzahl von Lichtleitern 10, beispielsweise in Form von einzelnen Lichtleitfasern, und einem optischen Multiplexer 20. Jeder Lichtleiter 10 hat ein Lichteintrittsende und ein Lichtaustrittsende. Die Lichtleiter 10 sind in einer im wesentlichen fingerförmigen Halterung 15 geschützt angeordnet, welche sich quer zur Transportrichtung P des Films M unter dieses erstreckt. Die Lichtleiter 10 sind dabei so angeordnet, dass ihre aus der Halterung 15 herausragenden Lichteintrittsenden in einer Ebene und hintereinander in einer Lichtleiterzeile 16 liegen, welche sich unmittelbar unterhalb der Messzeile Z des Films M befindet. Jeder Lichtleiter 10 empfängt somit jeweils nur Messlicht aus einem im wesentlichen punktförmigen Bereich der Messzeile Z bzw. des Films M, wodurch die angestrebte Auflösung der Messzeile Z in diskrete Abtastpunkte erreicht ist. Die Abmessungen der Abtastpunkte ergeben sich aus dem Querschnitt der Lichteintrittsenden der Lichtleiter 10, deren geometrischer Ausbildung (z.B. linsenförmig abgerundet) und dem Abstand der Lichteintrittsenden von der Messzeile Z bzw. dem Film M. Die Anzahl der Lichtleiter 10 beträgt beispielsweise 28, kann aber selbstverständlich je nach gewünschter Auflösung auch kleiner oder grösser gewählt werden.

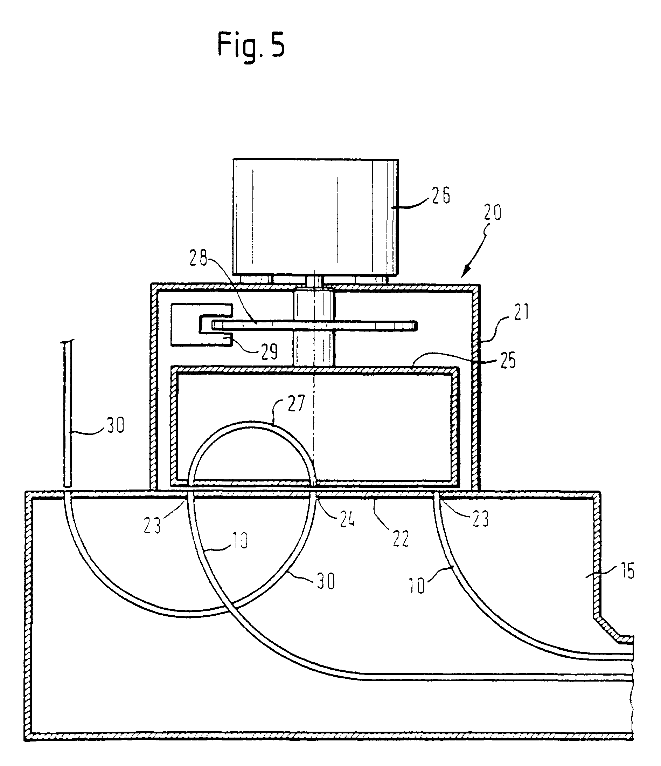

Die Halterung 15 ist mit dem schon erwähnten optischen Multiplexer 20 zu einer mechanischen Einheit verbunden. Wie am besten aus der Schnittdarstellung der Fig.5 hervorgeht, umfasst der Multiplexer 20 ein lichtdichtes Gehäuse 21, das auf die Halterung 15 aufgesetzt ist und eine Stirnwand 22 aufweist, die mit Anschlussöffnungen 23 bzw. 24 versehen ist. Die Anschlussöffnungen 23 bilden die Eingänge des Multiplexers 20 und sind längs einer Kreislinie angeordnet, die Anschlussöffnung 24 bildet den Ausgang des Multiplexers 20 und befindet sich im Zentrum dieser Kreislinie. In den Anschlussöffnungen 23 sind die Lichtaustrittsenden der Lichtleiter 10 befestigt, vorzugsweise in der gleichen Reihenfolge wie ihre Lichteintrittsenden in der Lichtleiterzeile 16. In der Anschlussöffnung 24 ist ein weiterer Lichtleiter 30 gefasst, welcher zur fotoelektrischen Wandlereinrichtung W führt und diese mit dem Multiplexer 20 optisch verbindet.

Im Gehäuse 21 des Multiplexers 20 ist ein optischer Kommutator 25 drehbar gelagert und durch einen auf dem Gehäuse 21 angeordneten Motor 26 angetrieben. Die Drehachse des optischen Kommutators 25 verläuft durch das Zentrum der Kreislinie, längs der die Anschlussöffnungen 23 angeordnet sind, und ist damit auch koaxial zur Anschlussöffnung 24. Im Kommutator 25 ist eine durch eine Lichtleitfaser gebildete optische Brücke 27 angeordnet, deren Enden axial bzw. auf der genannten Kreislinie ausmünden. Beim Drehen des Kommutators 25 verbindet somit die optische Brücke 27 die einzelnen Lichtleiter 10 sequentiell zyklisch optisch mit dem weiteren Lichtleiter 30. Der Motor 26 wird von der Steuereinrichtung S angesteuert, die jeweilige Drehstellung des Kommutators 25 wird von der Steuereinrichtung S mittels ebenfalls im Gehäuse 21 befindlichen Lichtschrankenanordnung 28-29 erfasst.

Mittels des optischen Multiplexers 20 wird das im Bereich der Messzeile Z vom Film M durchgelassene Messlicht für jeden einzelnen Abtastpunkt der Messzeile der Reihe nach zur fotoelektrischen Wandlereinrichtung W geleitet. Diese ist als Spektralfotometer (Spektrometer) ausgebildet, welches spektrale Messwerte erzeugt, die die Anteile des Messlichts in einer vorgegebenen Anzahl von Spektralbereichen repräsentieren. Typische Breiten solcher Spektralbereiche sind 10-20 nm. Diese spektralen Messwerte stehen dann über die Steuereinrichtung S für die weitere Verarbeitung bzw. Auswertung zur Verfügung. Geeignete Spektralfotometer sind bekannt und bedürfen daher keiner näheren Erläuterung. Es sei lediglich erwähnt, dass solche Spektralfotometer typischerweise mit einem auf einem Hohlspiegel aufgebrachten holografischen Gitter als dispersives Element sowie mit einem Dioden-Feld als eigentliches Wandlerelement ausgestattet sind.

Fig.2 zeigt eine erfindungsgemässe Abtastvorrichtung im Kontext eines fotografischen Kopiergeräts. Neben den schon erläuterten Teilen der Vorrichtung ist eine Filmbühne 40 mit einem Kopierfenster 41 erkennbar. Das Spektralfotometer W ist auf einer Montagefläche 42 des fotografischen Kopiergeräts angeordnet.

## Patentansprüche

1. Abtastvorrichtung zur im wesentlichen punktweisen fotoelektrischen Ausmessung von Bildfeldern eines fotografischen Films in einem fotografischen Kopiergerät,
a) mit einer Transporteinrichtung (T) zum Transportieren des Films (M) in einer Transportrichtung (P),
b) mit einer Beleuchtungseinrichtung (B) zum Beaufschlagen des Films (M) mit Messlicht in einer linienförmigen, sich im wesentlichen quer zur Transportrichtung über den Film (M) erstreckenden Messzeile (Z),
c) mit einer Auffangeinrichtung (A) für vom Film (M) im Bereich der Messzeile durchgelassenes Messlicht, und
d) mit einer mit der Auffangrichtung (A) optisch verbundenen fotoelektrischen Wandlereinrichtung (W) zur Umwandlung des vom Film (M) durchgelassenen Messlichts in entsprechende elektrische Signal, wobei
e) die Auffangeinrichtung (A) eine Vielzahl von faserförmigen Lichtleitern (10) aufweist, die jeweils ein Eingangs- und ein Ausgangsende haben, wobei die Eingangsenden längs der Messzeile angeordnet sind, so dass sie durchgelassenes Messlicht aus im wesentlichen punktförmigen Bereichen des Films (M) empfangen, und
f) mit einem optischen Multiplexer (20) mit einem motorisch antreibbaren optischen Kommutator (25) und mit einer der Vielzahl der Lichtleiter (10) entsprechenden Anzahl von Eingängen (23), wobei die Ausgangsenden der Lichtleiter (10) mit den Eingängen des optischen Multiplexers verbunden sind, wobei
g) der optische Multiplexer (20) einen einzigen Ausgang (24) aufweist, wobei
h) der einzige Ausgang (24) optisch mit der fotoelektrischen Wandlereinrichtung (W) verbunden ist, **dadurch gekennzeichnet, dass**
i) der optische Kommutator (25) einen motorisch antreibbaren Lichtleiter (27) aufweist, welcher die Eingänge (23) des Multiplexers zyklisch sequentiell mit dem einzigen Ausgang (24) des Multiplexers verbindet.

2. Vorrichtung nach Anspruch 1, weiter **dadurch gekennzeichnet, dass** die fotoelektrische Wandlereinrichtung (W) ein Spektralfotometer ist, welches spektrale Messwerte erzeugt, die die Anteile des Messlichts in einer vorgegebenen Anzahl von Spektralbereichen repräsentieren.

3. Vorrichtung nach einem der vorangehenden Ansprüche, weiter **dadurch gekennzeichnet, dass** der motorisch antreibbare optische Kommutator (25) rotierend ausgebildet ist, wobei die Eingänge (23) des Multiplexers zyklisch sequentiell optisch mit dem Ausgang (24) des Multiplexers verbunden werden.

4. Vorrichtung nach einem der vorangehenden Ansprüche, weiter **dadurch gekennzeichnet, dass** die Beleuchtungseinrichtung (B) eine Lichtquelle (1) und einen Licht von der Lichtquelle auf der Film (M) führenden Lichtleiterkörper (2) mit einer Eintrittsfläche (2d) und einer Austrittsfläche (2e) aufweist, wobei die Lichteintrittsfläche (2d) der Lichtquelle (1) zugewandt ist und die Lichtaustrittsfläche (2e) in unmittelbarer Nähe des Films (M) angeordnet und in ihrem Querschnitt so bemessen ist, dass der Film im wesentlichen nur im Bereich der Messzeile (Z) mit Messlicht beaufschlagt wird.

5. Vorrichtung nach Anspruch 4, weiter **dadurch gekennzeichnet, dass** der Lichtleitkörper (2) wenigstens zwei optisch verbundene Abschnitte (2a, 2b) aufweist, zwischen denen ein Filter (3) angeordnet ist.

6. Vorrichtung nach Anspruch 5, weiter **dadurch gekennzeichnet, dass** der der Lichtquelle (1) zugewandte Abschnitt (2a) des Lichtleitkörpers (2) aus Glas und der andere Abschnitt (2b, 2c) aus Kunststoff besteht.

7. Vorrichtung nach einem der vorangehenden Ansprüche, weiter **dadurch gekennzeichnet, dass** die faserförmigen Lichtleiter (10) der Auffangeinrichtung (A) in einer im wesentlichen fingerförmigen Halterung (15) angeordnet sind und dass die Halterung (15) mit dem optischen Multiplexer (20) zu einer mechanischen Einheit verbunden ist.

## Claims

1. A scanning device for photoelectrically measuring image frames of a photographic film point-by-point in a photographic copier,
a) having a transport device (T) for transporting the film (M) in a transport direction (P),
b) having an illumination device (B) for applying measuring light to the film (M) in a linear measuring line (Z) which extends substantially transversely over the film (M) with respect to the transport direction,
c) having a sensor device (A) for measuring light passing through the film (M) in the region of the measuring line, and
d) having a photoelectric converter device (W) for converting the measuring light passing through the film (M) into corresponding electrical signals, said converter device (W) being optically connected to the sensor device (A),
e) the sensor device (A) having a plurality of fibre-optic light guides (10), which each have an input end and an output end, the input ends being arranged along the measuring line so that they receive measuring light passing through in substantially point-shaped regions of the film (M), and
f) having an optical multiplexer (20) having an optical commutator (25) which may be motor-driven, and having a number of inputs (23) which corresponds to the plurality of light guides (10), the output ends of the light guides (10) being connected to the inputs of the optical multiplexer,
g) the optical multiplexer (20) having a single output (24),
h) the single output (24) being optically connected to the photoelectric converter device (W), **characterized in that**
i) the optical commutator (25) has a light guide (27) which may be motor-driven and which connects the inputs (23) of the multiplexer in cyclic sequence to the single output (24) of the multiplexer.

2. A device according to Claim 1, further **characterized in that** the photoelectric converter device (W) is a spectrophotometer, which generates spectral measurement values representing the proportion of measuring light in a predetermined number of spectral regions.

3. A device according to one of the preceding claims, further **characterized in that** the optical commutator (25), which may be motor-driven, is of a rotating construction, the inputs (23) of the multiplexers being optically connected in cyclic sequence to the output (24) of the multiplexer.

4. A device according to one of the preceding claims, further **characterized in that** the illumination device (B) has a light source (1) and a light-guide body (2) which has an entry surface (2d) and an exit surface (2e) and guides light from the light source onto the film (M), the light-entry surface (2d) facing the light source (1) and the light-exit surface (2e) being arranged immediately adjacent to the film (M) and having a cross-section which is dimensioned such that measuring light is applied to the film substantially only in the region of the measuring line (Z).

5. A device according to Claim 4, further **characterized in that** the light-guide body (2) has at least two optically connected portions (2a, 2b) between which a filter (3) is arranged.

6. A device according to Claim 5, further **characterized in that** that portion (2a) of the light-guide body (2) which faces the light-source (1) is made from glass, and the other portion (2b, 2c) is made from plastics material.

7. A device according to one of the preceding claims, further **characterized in that** the fibre-optic light guides (10) of the sensor device (A) are arranged in a substantially finger-shaped mount (15), and **in that** the mount (15) is connected to the optical multiplexer (20) to form a mechanical unit.

## Revendications

1. Dispositif de balayage pour la mesure photo-électrique, sensiblement point par point, de champs d'image d'un film photographique dans un copieur photographique,
a) comportant un dispositif de transport (T) pour le transport du film (M) dans un sens de transport (P),
b) comportant un dispositif d'éclairage (B) pour insoler le film (M) avec une lumière de mesure en une ligne de mesure (Z) linéaire, qui s'étend sensiblement transversalement à la direction de transport, sur le film (M),
c) comportant un dispositif de réception (A) de la lumière de mesure que le film (M) a laissé passer dans la zone de la ligne de mesure, et
d) comportant un dispositif de conversion photoélectrique (W) relié optiquement au dispositif de réception (A), pour la conversion de la lumière de mesure, que le film (M) a laissé passer, en signaux électriques correspondants,
e) le dispositif de réception (A) comportant une pluralité de guides de lumière (10) sous forme de fibres qui possèdent chacun une extrémité d'entrée et une extrémité de sortie, les extrémités d'entrée étant disposées le long de la ligne de mesure, de sorte qu'elles reçoivent la lumière de mesure passante provenant de zones sensiblement en forme de points du film (M), et
f) comportant un multiplexeur optique (20) avec un commutateur optique (25), qui peut être entraîné au moyen d'un moteur, et comportant des entrées (23), dont le nombre correspond à la pluralité de guides de lumière (10), les extrémités de sortie des guides de lumière (10) étant reliées aux entrées du multiplexeur optique,
g) le multiplexeur optique (20) comportant une seule sortie (24), tandis que
h) l'unique sortie (24) est reliée optiquement au dispositif de conversion photoélectrique (W), **caractérisé en ce que**
i) le commutateur optique (25) comporte un guide de lumière (27) qui peut être entraîné au moyen d'un moteur et qui relie les entrées (23) du multiplexeur de manière cyclique et séquentielle à l'unique sortie (24) du multiplexeur.

2. Dispositif selon la revendication 1, **caractérisé en outre en ce que** le dispositif de conversion photoélectrique (W) est un photomètre spectral qui produit des valeurs de mesure spectrales qui représentent les composantes de la lumière de mesure dans un nombre donné de zones spectrales.

3. Dispositif selon l'une des revendications précédentes, **caractérisé en outre en ce que** le commutateur optique (25), qui peut être entraîné au moyen d'un moteur, est conçu rotatif, les entrées (23) du multiplexeur étant reliées de manière cyclique, séquentielle et optique à la sortie (24) du multiplexeur.

4. Dispositif selon l'une des revendications précédentes, **caractérisé en outre en ce que** le dispositif d'éclairage (B) comporte une source de lumière (1) et un corps de guide de lumière (2) qui guide la lumière depuis la source de lumière sur le film (M) avec une surface d'entrée (2d) et une surface de sortie (2e), la surface d'entrée de lumière (2d) étant tournée vers la source de lumière (1) et la surface de sortie de lumière (2e) étant disposée à proximité immédiate du film (M) et sa section transversale présentant une dimension telle que le film n'est insolé par la lumière de mesure sensiblement que dans la zone de la ligne de mesure (Z).

5. Dispositif selon la revendication 4, **caractérisé en outre en ce que** le corps de guide de lumière (2) comporte au moins deux portions (2a, 2b) reliées optiquement, entre lesquelles est disposé un filtre (3).

6. Dispositif selon la revendication 5, **caractérisé en outre en ce que** la portion (2a) du corps de guide de lumière (2), tournée vers la source de lumière (1), est en verre, et l'autre portion (2b, 2c), en matière plastique.

7. Dispositif selon l'une des revendications précédentes, **caractérisé en outre en ce que** les guides de lumière (10) sous forme de fibres du dispositif de réception (A) sont disposés dans un support (15) sensiblement en forme de doigt, et **en ce que** le support (15) est relié au multiplexeur optique (20) pour former une unité mécanique.
